# EUROPEAN PATENT APPLICATION

(11) **EP 4 672 406 A1**
(43) Date of publication of application: **31.12.2025**
(21) Application number: 25184251.4
(22) Date of filing: 20.06.2025
(51) Int. Cl.: H01M 10/0525, H01M 10/42, H01M 10/48, H01M 10/613, H01M 10/625, H01M 10/6554, H01M 50/204, H01M 50/271, H01M 50/296, H01M 50/342, H01M 50/358, H01M 50/581, H01M 50/583

(54) **SOLID STATE MODULAR BATTERY AND CORRESPONDING SYSTEM OF MODULAR BATTERIES**

(30) Priority: 24.06.2024 IT 202400014458
(71) Applicant: Elsa Solutions S.p.A., 40026 Imola (BO) (IT)
(72) Inventor: DAL POZZO, Davide, 40026 IMOLA (BO) (IT)
(74) Representative: Studio Torta S.p.A.

(57) **Abstract**

A modular battery (1) is described, having a casing (2) with a main body portion (3) housing a plurality of electrochemical cells (20), of the Lithium solid state type, connected to provide a nominal voltage between a positive terminal and a negative terminal of the modular battery (1); wherein the casing (2) further houses within it an internal electronics comprising a BMS module (30) for managing and controlling the electrochemical cells (20) and further coupled to a communication line (32) for communication with devices external to the modular battery (1); and wherein the internal electronics and the BMS module (30) are configured to define a modular architecture for the modular battery (1), which can be configured as: a stand-alone independent module; a master module, i.e., main module in a string or "stack" of modules; or a slave module, subject to control and coordination by the master module.

## Description

### CROSS-REFERENCE TO RELATED APPLICATIONS

This patent application claims priority from Italian patent application no. 102024000014458 filed on June 24, 2024, the entire disclosure of which is incorporated herein by reference.

### TECHNICAL FIELD

This solution relates to a solid state modular battery and to a corresponding system of modular batteries.

### BACKGROUND

Distributed electrical energy storage systems (so-called BESS, Battery Energy Storage Systems) are known, in particular battery energy storage systems consisting of a given number of storage elements. Each of these elements consists of a modular battery formed by a plurality of electrochemical cells, typically produced using Lithium technology.

Electrical energy storage systems of this type are, for example, used in traction systems for construction or agricultural machinery; or in propulsion systems and/or services in the naval, and more generally marine, field.

Although several battery energy storage systems exist nowadays, at least in certain application areas there is a need for solutions that are easier to use and install, and also offer improved performance in terms of a corresponding electrical safety.

### SUMMARY

The aim of this solution is generally to provide an answer to the above-mentioned need, offering an improved solution compared to known modular battery energy storage systems.

According to the present solution, a modular solid-state battery and a corresponding modular battery system, as defined in the attached claims, are provided.

### BRIEF DESCRIPTION OF THE FIGURES

For a better understanding of this invention, a preferred embodiment thereof will now be described, purely by way of a non-limiting example and with reference to the accompanying drawings, wherein:
- Figure 1 shows a front perspective view of a modular battery, according to one embodiment of the present solution;
- Figure 2 shows a rear perspective view of the modular battery;
- Figure 3 shows a rear perspective view of a portion of the modular battery, according to one aspect of the present solution;
- Figure 4 is a schematic cross section of a main body portion of a casing of the modular battery, in a first embodiment of a corresponding cooling system;
- Figure 5 is a schematic cross section of the main body portion, in a second embodiment of a corresponding cooling system;
- Figures 6A-6C are equivalent circuit diagrams of the modular battery in different operating configurations; and
- Figure 7 is an equivalent circuit diagram of an electrical energy storage system including a stack of modular batteries, according to a further aspect of the present solution.

### DESCRIPTION OF EMBODIMENTS

As will be described below, one aspect of the present solution involves the provision of a solid-state Lithium technology battery, with a modular construction or architecture and having improved features of configuration and flexibility of use and electrical safety.

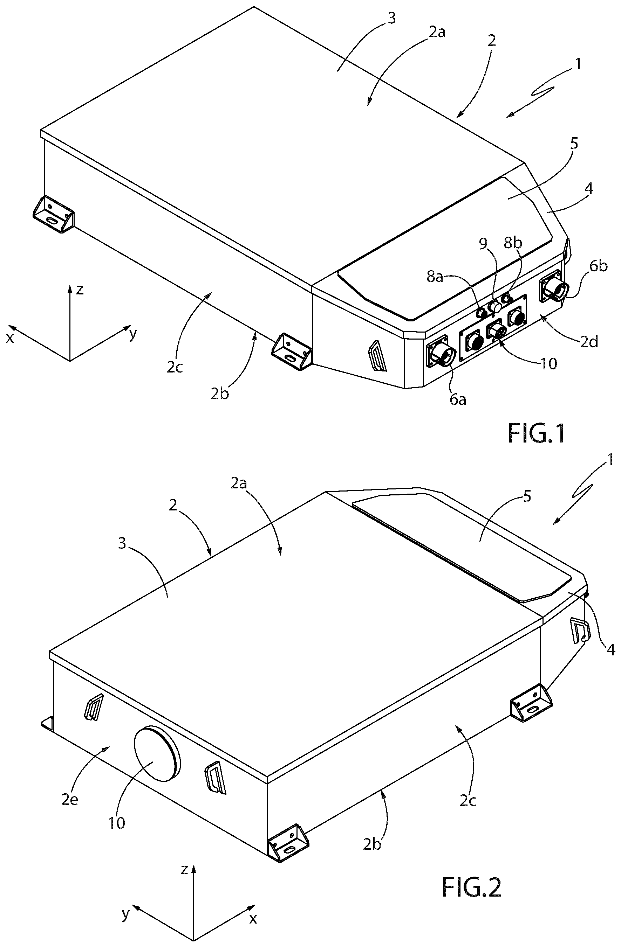

Referring first to Figures 1 and 2, a modular battery 1 in accordance with an embodiment of the present solution comprises a casing (or housing or package) 2, made of a metal material, for example aluminium, which ensures an adequate hermetic seal, for example an IP65 degree of protection (international protection rating defined by the international standard IEC 60529).

This casing 2 has an essentially box-like shape, bounded by an upper main face 2a and a lower main face 2b, extending across a horizontal plane xy, and lateral faces 2c, a front face 2d and a rear face 2e extending along a vertical axis z, orthogonal to said horizontal plane xy.

The casing 2 also comprises a main body portion 3, which encloses within it, in a manner not illustrated in detail herein, multiple electrolytic cells, in particular made using solid-state Lithium technology. In particular, in a possible embodiment, these cells are of the so-called "blade" type, characterised by an elongated and narrow shape.

For example, the electrolytic cells, connected to each other in series within the above-mentioned main body portion 3 of the casing 2, may provide a total nominal voltage of 56 V, with a current capacity of 246 Ah.

The above-mentioned casing 2 further comprises a front portion 4, at the front face 2d, having an upper surface, defining part of the above-mentioned upper main face 2a, inclined at a negative angle with respect to the horizontal plane xy (consequently, the front face 2d has a height along the vertical axis z that is lower than a corresponding height of the rear face 2e).

Internally, a separating wall or partition may advantageously be included between the above-mentioned front portion 4 and the above-mentioned body portion 3.

This front portion 4 is configured to house the electronic and control circuitry of the modular battery 1, including, for example, a corresponding management module, the so-called BMS (Battery Management System) module.

In a known manner, the BMS module is a control unit designed to manage the operation and monitor the operational state of the modular battery 1, for example to avoid its operation in conditions that are not safe. In particular, the BMS module is designed to control and manage the set of electrochemical cells that compose the modular battery 1, monitoring their charge status, temperature, voltage and/or other parameters, in order, for example, to balance their charge status if there is an unbalance between the various electrochemical cells.

According to one aspect of the present solution, a removable plate 5 (coupled to an upper surface, for example by means of screws or similar, removable fastening elements) is provided at the above-mentioned upper surface of the front portion 4 of the casing 1. This removable plate 5 allows access to the interior of the above-mentioned front portion 4, for the purpose of inspection and possible maintenance of the electronic circuitry of the modular battery 1, advantageously without compromising the hermetic seal of the body portion 3 housing the electrochemical cells.

At the above-mentioned front face 2d, the casing 2 also carries suitable electrical connectors, electrically coupled, within said front portion 4, to the electronic circuitry, and in particular: a first and a second power connector 6a, 6b, for example a male connector and a female connector, coupled to a positive terminal and to a negative terminal of the modular battery 1; a first and a second data connector 8a, 8b, in particular of the CANbus type (as will be discussed below, these data connectors allow communication between several modular batteries, connected to each other in series or in parallel); a diagnostic connector 9; and one or more signal input/output connectors 10, for example to receive command or configuration signals from external peripheral devices (for example, a battery charger, an ECU - Electronic Control Unit, a PMS - Power Management System, an EMS - Energy Management System) or to provide status or detection signals to the same external peripheral devices.

According to one aspect of the present solution, at the above-mentioned rear face 2e, the casing 2 also has a venting membrane 10, integrated into the same rear face 2e and having a controlled opening (rupture) in the event of internal overpressure.

This venting membrane 10 provides an important safety feature, as it allows gases that may be generated due to problems or malfunctions of the electrochemical cells, for example in the event of thermal runaways, to be released towards the outside of the casing 2.

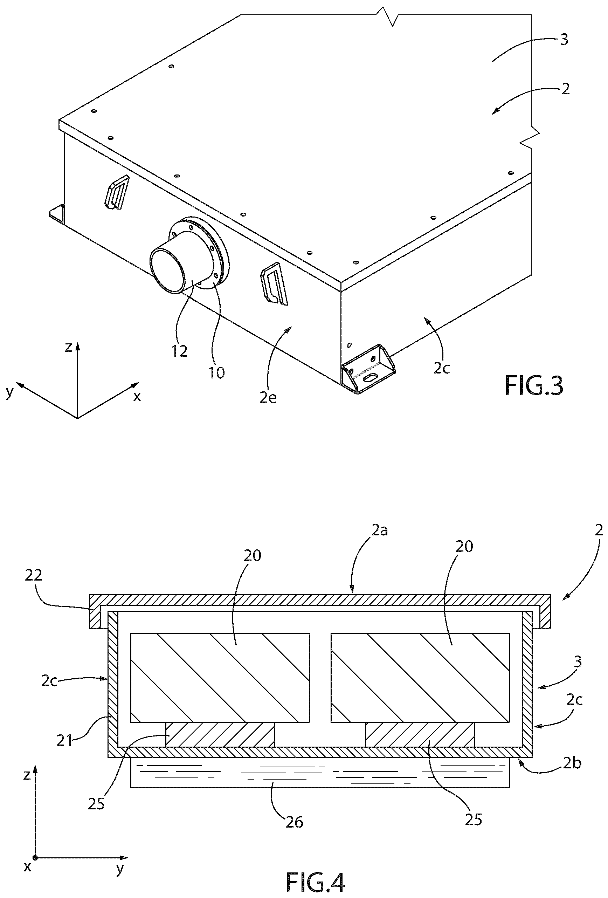

Advantageously, and as illustrated in Figure 3, an extraction conduit 12 (of which only an initial portion is shown) may also be coupled to this venting membrane 10. This conduit is designed to convey the gases, which escape in the event of internal overpressure and consequent rupture of the above-mentioned venting membrane 10, without affecting the environment (room or battery compartment) in which the modular battery 1 is installed.

Overall, the above-mentioned casing 2 has small dimensions and is particularly compact along the above-mentioned vertical axis z, having a height of less than 200 mm, for example 165 mm.

This feature makes it easy, for example, to stack several units of the above-mentioned modular batteries 1 along the vertical axis z to form a "stack" of batteries (in such a stack, the upper main face 2a of a modular battery 1 arranged below is thus arranged facing the lower main face 2b of a modular battery 1 arranged above).

In this stack, as will also be described in detail below, the modular batteries 1 can advantageously be connected to each other in series, in order to achieve desired voltages, in particular high voltages, for example up to approximately 800 V.

In particular, the electrical connections in series between the stacked modular batteries 1 are made by means of power cables suitably coupled to the above-mentioned first and second power connectors 6a, 6b; in addition, CAN lines or buses, coupled to the above-mentioned first and second data connectors 8a, 8b, couple the stacked modular batteries 1 together in terms of data connection.

In addition, in the above-mentioned stack, the removable plate 5 remains easily accessible for an operator, thanks to the appropriate inclination of the upper surface of the front portion 4 of the casing 2.

According to an additional aspect of the present solution, the internal layout adopted and the solutions relating to the provision of the Lithium cells and their casing allow the modular battery 1 to properly operate in different cooling configurations, with different electrical performance, but still preserving the required robustness, durability and safety characteristics, even under high electrical loads, without any particular increase in temperature.

Specifically, the modular battery 1 can be provided with a natural convection cooling system, or a forced air cooling, or even a liquid cooling by means of a cold plate applied below, in each case ensuring that it meets the IP65 degree of protection.

In particular, in the case of liquid-cooled system, any failure of the cooling system is not such as to prevent the operation of the modular battery 1, which can continue to work, albeit with reduced electrical performance.

More specifically, Figure 4 schematically shows the casing 2 of the modular battery 1, in particular the corresponding portion of the body 3 housing the electrochemical cells, of the solid-state type, here denoted with 20 (these solid-state cells 20 have, in the illustrated example, an elongated blade-like shape, along a first horizontal axis x of the horizontal plane xy).

Specifically, the above-mentioned casing 2 has a cup-shaped base 21, which houses the above-mentioned solid-state cells 20, and a lid 22, which closes at the top the above-mentioned base 21, for example by means of screws or similar fastening elements, so as to ensure the required degree of protection (for example IP65).

Specifically, the solid-state cells 20 are coupled within the base 21, at the above-mentioned lower main face 2b of the casing 2, by means of a respective pad 25 of a thermally conductive material, a so-called "thermal plate" or "thermal pad" (for example, of a silicone material with high electrical conductivity).

In addition, below the same lower main face 2b, externally to the casing 2, a plate 26 may be arranged, internally provided with a suitable duct for a cooling fluid (according to the "cold plate" and "liquid cooling" technique).

In particular, the presence of the above-mentioned pads 25 allows to optimise cooling, due to the high conducting power and effective removal of heat directly from the internal cells to the plate 26. In a known way, which is not described in detail herein, the cooling liquid allows in such a case to cool the solid-state cells 20 and maintain a controlled temperature within a safe range (for example, in order to prevent the above-mentioned thermal runaways).

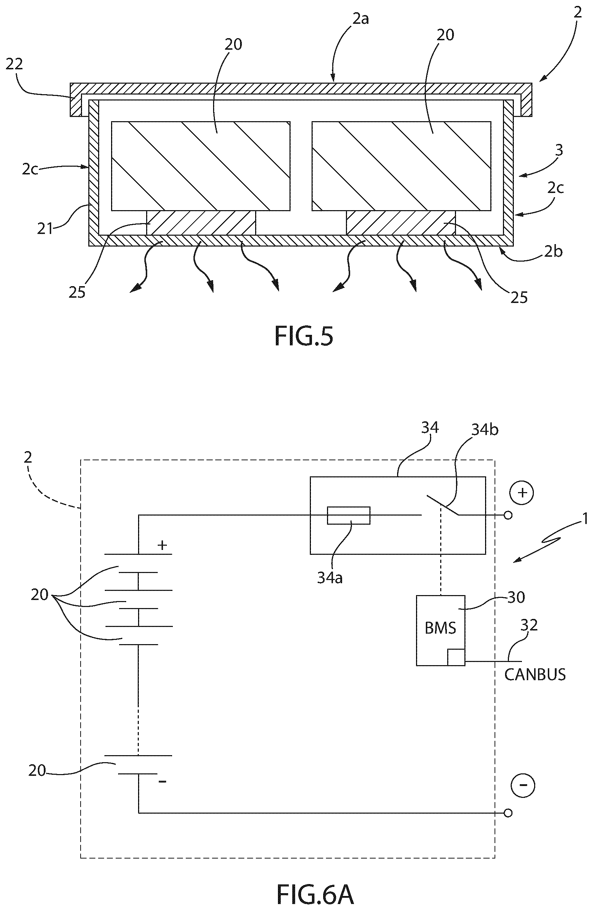

Figure 5 schematically shows the same portion of the body 3 of the casing 2 of the modular battery 1, in the event of cooling by air, by convection or forced ventilation (the air flow is represented by the arrows in Figure 5). Even in this case, the presence of the above-mentioned pads 25 allows a faster outflow of heat towards the outside of the casing 2.

The design of the battery's internal electrical circuitry, optimised to provide its modular architecture, is now described in more detail.

In particular, according to one aspect of the present solution, each modular battery 1 can be configured to operate as:
an independent or "STAND ALONE" module, that is, as an independent battery or battery pack with an integrated control and safety circuit (so-called BDU, Battery Disconnect Unit); or
a primary or "MASTER" module, that is, as the main module of a string or stack of modules connected in series to reach a desired battery voltage, which is a multiple of the unit value of each modular battery (if one module has a nominal voltage of 56 V, two modules in series allow a voltage of 112 V and so on up to a maximum value of, for example, 800 V); or
a secondary or SLAVE module, that is, as a module subject to control and coordination by the main or MASTER module.

More specifically, Figure 6A shows an equivalent circuit diagram of the modular battery 1, in the case of a stand-alone configuration.

In particular, Figure 6A shows the solid-state cells 20 (illustrated with their electrical equivalent) connected together in series between a negative '-' terminal and a positive '+' terminal of the modular battery 1; and also the BMS module, indicated with reference number 30, inside the modular battery 1 (in particular within its casing 2, shown here schematically) and configured to manage the operation of the solid-state cells 20 and also to interface with external peripheral devices via a communication line 32, in particular a CANbus line.

In particular, the BMS module 30 is provided with a system for measuring the voltage and temperature of the individual solid-state cells 20 within the modular battery 1, in order to always operate under the safest and most optimised conditions to preserve the service life of the battery, extending its duration, regardless of the configuration of the modular battery 1. In particular, the BMS module 30 is responsible for monitoring cell voltages and temperatures and keeps them mutually balanced by balancing energy via suitable balancing resistors.

In this configuration, the modular battery 1 also comprises, integrated within the casing 2, a control and safety circuit stage, indicated with reference number 34, operating as a BDU, Battery Disconnect Unit.

In particular, this circuit stage 34 comprises a safety fuse element 34a and a safety relay element 34b, connected in series with each other and interposed between the positive terminal of the modular battery 1 and the solid-state cells 20 connected in series.

The BMS module 30 is configured to control and drive the above-mentioned circuit stage 34, in particular the associated safety relay element 34b, in such a way as to implement a selective disconnection of the solid-state cells 20 from the above-mentioned positive terminal, for example in the event of faults or other issues, or to prevent operation in temperature or voltage conditions not suitable for the range allowed by the same cells, thus preserving their correct operation.

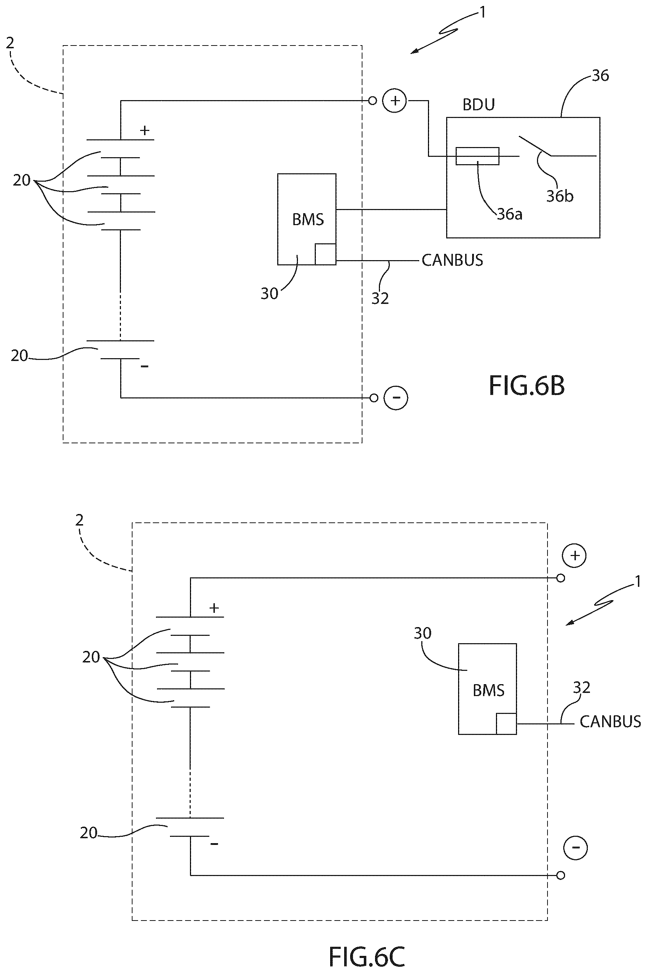

Figure 6B instead shows an equivalent circuit diagram of the modular battery 1 in the case of the "master" configuration.

This configuration differs from the stand-alone configuration (discussed above) in that it does not comprise internally the safety circuitry. In this case, there is indeed a BDU stage 36, external to the modular battery 1 (and to its casing 2), operatively coupled to the BMS module 30. This BDU stage 36 comprises, similarly to what has been discussed above, a respective safety fuse element 36a and a respective safety relay element 36b, connected in series with each other.

Figure 6C moreover shows the "slave" configuration of the modular battery 1, which in this case comprises the solid-state cells 20, connected to each other in series, and the BMS module 30, operatively coupled via the communication line 32, of the CANbus type, with the outside of the same modular battery 1.

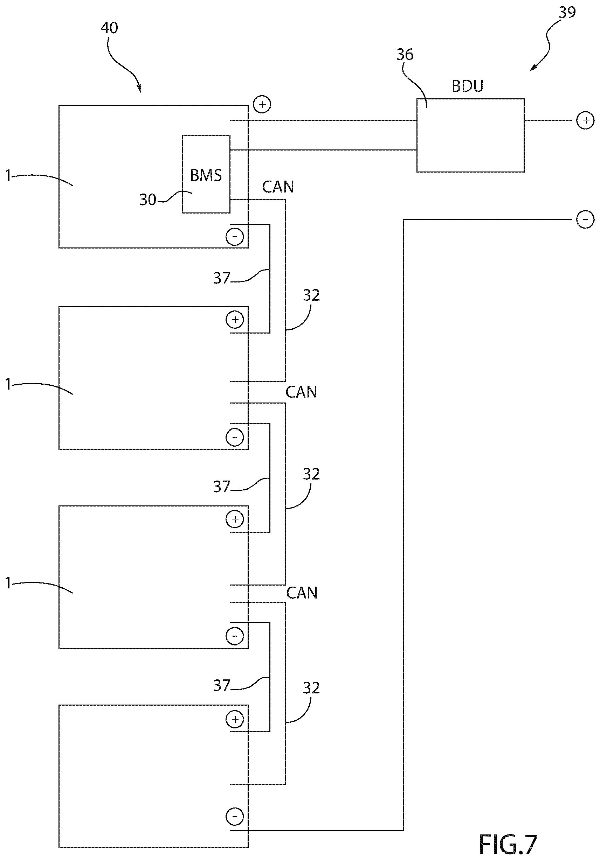

Figure 7 shows the configuration of an electrical energy storage system, denoted as a whole by reference number 39, comprising a string or stack, denoted here by reference number 40, of modular batteries 1, of which a first modular battery 1 acts as the "master", with its BMS module 30 coupled to the BDU stage 36, external to the stack; and the remaining modular batteries 1 act as "slaves", operating subordinate and subservient to the master module (for simplicity of illustration, the BMS module 30 of the slave batteries is not shown in this Figure 7).

In particular, each modular battery 1 acting as a "slave" has a positive terminal connected to the negative terminal of a modular battery 1 in an higher position of the stack 40 and a negative terminal connected to the positive terminal of the modular battery 1 in a lower position of the stack 40, via respective power connection cables, indicated with reference number 37.

In addition, the modular battery 1 acting as the "master" has a positive terminal connected, with the interposition of the BDU stage 36, to a positive energy supply terminal of the electrical energy storage system 39, and a negative terminal connected to the positive terminal of a first modular battery 1 acting as "slave"; and a last modular battery 1 acting as "slave" in the stack 40 has a negative terminal connected to a negative energy supply terminal of the electric energy storage system 39.

In addition, in the stack 40, the modular batteries 1 have communication lines 32, of the CANbus type, connected to each other (in a "daisy chain" connection, of a known type, not described in detail herein), with the CANbus line of the first modular battery 1 of the stack 40 acting as "slave" connected to the respective CANbus line of the modular battery 1 acting as "master".

The modular batteries 1 in the stack, one of which is configured as "master" and the others configured as "slaves", are configured to work as a single system coordinated with each other and not as stand-alone modules. This makes it possible to safely manage the "stack" system, with a stack release device to prevent hazardous situations (by way of non-limiting example, overvoltage, overcurrent and short circuits).

In fact, the "master" module not only coordinates communication with external power electronics devices such as inverters or DC/DC converters, instantaneously communicating the current and voltage limits allowed via CANBUS, but also acquires the temperature and voltage values and status of each individual modular battery 1 and each individual cell of the stack, thus managing the system as a true supervisor.

In essence, the electrical circuitry internal to the modular battery 1 allows the same battery to be adapted to different requirements with minimal hardware and/or software modifications.

In particular, it is possible to provide the modular battery 1 with, or without, the integrated circuit stage 34 within its casing 2 (comprising the fuse element 34a and relay element 34b); furthermore, the firmware of the BMS module 30 can be modified appropriately without having to completely re-adapt the module, but simply by acting on the parameter configuration of the BMS module 30.

For example, thanks to different firmware sets and programmable CANbus communication, it is possible to establish the connection between the modular batteries 1 in the different configurations.

The BMS module 30 included in each modular battery 1 is indeed provided with programmable parameter sets in order to be able to define the role of the battery in which it is applied and thus have the correct information, for example regarding the peripheral devices to be managed (for example safety relays) and/or the signals to be acquired.

Via the communication line 32, of the CANbus type, it is also possible to make the modular batteries 1 to communicate with each other, in order to establish the hierarchy of each respective BMS module 30 and to couple the modular batteries 1 in the stack 40, both on a physical and software level.

In each BMS module 30, the CANbus level of communication within the stack 40, between BMS modules 30 and between their modular batteries 1, can advantageously be separated from the communication with external peripheral devices (battery chargers, ECUs, PMS power management systems, EMS energy balance management systems).

The advantages of the proposed solution are evident from the above description.

In any case, it should be emphasised that this solution provides a solid-state lithium battery with a modular architecture and having features of high configurability and flexibility of use, as well as electrical safety.

In particular, unlike other existing solutions that are geared towards the possible parallel connection of modules aimed at increasing the provided energy on a particular device, the present solution enables the provision of battery stacks that are connected also in series, increasing the overall voltage of the string and thus enabling not only an increase in provided energy but also a higher power delivery, with a same current that can be provided in the discharge phase and in the recharge phase by each individual battery pack.

Lastly, it is clear that modifications and variations may be provided to what has been described and illustrated herein, without departing from the scope of this invention, as set forth in the claims.

In particular, it is underlined that the modular batteries 1 may also be configured in a "multi-parallel" configuration, for example with several stacks 40 of modular batteries 1, or with several modular batteries 1 in an independent configuration, connected together in parallel, thus maintaining a nominal voltage of the resulting system equal to the nominal voltage of the stack 40 (or single battery, for example equal to 56 V), but with the possibility of increasing the overall current capacity and/or of providing an integrated current balancing system on a common bus, for example generating a current flow between a more charged battery pack to a less charged battery pack.

In particular, each of the modular batteries 1 may internally comprise a current balancing system aimed at generating a current flow on a common bus (DC) between a more charged modular battery 1 to a less charged modular battery 1. This current balancing system can, for example, manage the selective closing of a circuit on a power resistor suitable for managing the flow of current between the battery packs without generating transients or current spikes that could instantly damage the power and safety relays inside the modular batteries 1.

In general, it is again underlined that the system described can find advantageous use in, for example, electric drive systems for large machinery, such as construction or agricultural machinery; or in a propulsion system and/or services in the naval or marine sector.

## Claims

1. A modular battery (1), comprising a casing (2) having a main body portion (3) housing a plurality of electrochemical cells (20), of the Lithium solid state type, connected so as to provide a nominal voltage between a positive terminal and a negative terminal of said modular battery (1);
wherein said casing (2) further houses within it an internal electronics comprising a BMS module (30) configured to manage and control the electrochemical cells (20) and further coupled to a communication line (32) for communication with the outside of said modular battery (1),
said internal electronics and said BMS module (30) being configured to define a modular architecture for said modular battery (1), which can be configured alternatively as: a stand-alone independent module; a master module, i.e., main module in a module group; or a slave module, subject to control and coordination by the master module.

2. The battery according to claim 1, wherein said modular battery (1), in the stand-alone independent module configuration, comprises internally within the casing (2) a safety circuit stage (34) defined by a safety fuse element (34a) and a safety relay element (34b), connected in series with each other and interposed between the positive terminal of the modular battery (1) and the electrochemical cells (20) connected in series; wherein said BMS module (30) is configured to control and drive said circuit stage (34), so as to implement selective disconnection of the electrochemical cells (20) from said positive terminal.

3. The battery according to claim 1 or 2, wherein said modular battery (1), in the master module configuration, has its respective BMS module (30) configured to be operatively coupled to a BDU, Battery Disconnect Unit, stage (36) external to the casing (2) of said modular battery (1), and moreover to at least one slave module via the respective communication line (32).

4. The battery according to any one of the preceding claims, wherein said modular battery (1), in the slave module configuration, has the respective BMS module (30) configured to be operatively coupled to a respective master module or to at least one additional "slave" module, via the respective communication line (32).

5. The battery according to any one of the preceding claims, wherein said communication line (32) is a CANbus line.

6. The battery according to any one of the preceding claims, wherein said casing (2) comprises a further portion (4), distinct from said main body portion (3), configured to house said internal electronics and having a surface in which a removable plate (5) is provided, designed for allowing access to the interior of said further portion (4) for purposes of inspection and maintenance of said electronics.

7. The battery according to claim 6, wherein said further portion (4) defines a face (2d) of said casing (2), which carries electrical connectors, electrically coupled, within said further portion (4), to said internal electronics, comprising: a first and a second power connector (6a, 6b), coupled to the positive terminal and the negative terminal of the modular battery (1); a first and a second data connector (8a, 8b), of the CANbus type; and one or more signal input/output connectors (10), configured for exchanging signals with one or more external peripheral devices.

8. The battery according to any one of the preceding claims, wherein said main body portion (3) of said casing (2) comprises a base (21) shaped like a cup and housing said electrochemical cells (20) and a lid (22), which closes the base (21) at the top, so as to provide a hermetically sealed coupling; wherein said electrochemical cells (20) are coupled internally to the base (21), at a main face (2b) of the casing (2), by means of a respective pad (25) of thermally conductive material; wherein said main face (2b) is designed to be cooled by means of an air or liquid cooling system.

9. The battery according to claim 8, wherein said main face (2b) of the casing (2) is configured to be coupled to a plate (26), internally provided with a duct for a cooling fluid.

10. The battery according to any one of the preceding claims, wherein said casing (2) has an outer face (2e), which carries a venting membrane (10), integrated into said outer face (2e) and having a controlled rupture opening in the event of an overpressure inside said casing (2).

11. The battery according to claim 10, further comprising an extraction conduit (12) coupled to said venting membrane (10), configured to convey gases escaping in the event of internal overpressure and to a consequent rupture of said venting membrane (10).

12. An electrical energy storage system (39), comprising a stack (40) of modular batteries (1) connected to each other in series or in parallel and made according to any of the preceding claims.

13. The system according to claim 12, wherein the modular batteries (1) of the group are connected to each other in series in order to reach a desired voltage and are designed to form a stack (40) in which said modular batteries (1) cooperate with each other in a coordinated manner; wherein a first modular battery (1) in said "stack" (40) acts as "master," with its BMS module (30) coupled to a BDU stage (36), external to the stack (40); and remaining modular batteries (1) act as "slaves," with operation subordinate and subservient to the "master" battery.

14. The system according to claim 13, wherein the modular battery (1) acting as the "master" has a positive terminal connected, with the interposition of the BDU stage (36), to a positive energy supply terminal of the electrical energy storage system (39), and a negative terminal connected to the positive terminal of a first modular battery (1) acting as "slave"; and a last modular battery (1) acting as a "slave" in the stack (40) has a negative terminal connected to a negative energy supply terminal of the electric energy storage system (39); and wherein, in the stack (40), the modular batteries (1) have their respective communication lines (32) connected to each other.

15. The system according to claim 12, wherein the modular batteries (1) of the group are connected to each other in parallel, and wherein each of said modular batteries (1) comprises internally a current balancing system that is designed to generate a flow of current on a common bus between a more charged modular battery (1) towards a less charged modular battery (1).
